# EUROPEAN PATENT SPECIFICATION

(11) **EP 1 212 555 B1**
(45) Date of publication and mention of the grant of the patent: **23.02.2005**
(21) Application number: 00960834.0
(22) Date of filing: 15.09.2000
(51) Int. Cl.: F16J 15/12, F16L 41/04

(54) **SEAL ASSEMBLY**
DICHTUNGSANORDNUNG
ENSEMBLE D'ETANCHEITE

(30) Priority: 16.09.1999 GB 9921791
(43) Date of publication of application: 12.06.2002
(73) Proprietor: FTL Seals Technology Limited, Leeds LS27 0TG (GB)
(72) Inventor: SMITH, Steve, Moortown Leeds LS17 6SP (GB)
(74) Representative: Harrison Goddard Foote
(86) International application number: PCT/GB2000/003547
(87) International publication number: WO 2001/020201

(56) References cited:
- FR-A- 1 549 562
- GB-A- 1 214 986
- US-A- 5 040 828

## Description

This invention relates to a seal assembly.

Natural gas is commonly transported, in bulk, across land through large diameter (eg 0,6 m or 24 inch) steel pipelines. It is not uncommon to introduce offtakes or three way joints at certain points on the main transmission pipeline. Currently, a three way joint is welded into the pipeline, following the removal of a section of pipe. This procedure when carried out with gas loaded into the line is hazardous and expensive, involving the installation of a secondary "loop" through which to bypass the gas whilst thejoint is installed.

We have now found a novel form of seal which is capable of acting as a primary sealing element that can provide a seal between a main transmission line and bonded branch connection. The seal must withstand service and test pressure including pressure reversals and must also be able to accommodate eccentricity of the branch connection to the main pipeline.

Copending British Patent Application No. 9917 360.1 describes a novel method of securing a branch assembly to a pipeline. Such a method requires a specialised seal which is not only adapted to operate under significant pressures but can also be fitted to non-planar or arcuate surfaces.

British Patent Application No. 1214986 describes a sealing means, as defined in the preamble portion of claim 1, for use with a pair of pipes which are angularly movable relative to each other. Generally, the sealing means comprises an annular body portion and a pair of spaced tongues, the tongues being provided with inwardly inclined ears. However, the seal described therein is designed for use in connection with "parallel" pipeline flange joints. The seal does not provide a solution to the problem of forming a fluid tight seal in a branched pipeline. French Patent Application No. 1549562 describes a seal assembly which comprises a pair of circumferential grooves which are adapted to prevent the ingress of fluid.

Thus it is known to use "U" ring seals in pressure systems wherein the pressure acts on the side wall of the U ring. However, we have now surprisingly found a novel seal assembly which is sufficiently flexible so as to be adaptable to fit parallel, planar, arcuate or convex surfaces.

Thus according to the invention we provide a radial sealing ring assembly adapted for use in a pressurised system which comprises a radial sealing ring provided with at least a pair of primary sealing lips radially disposed on a first, circumferential, face of the ring, a second, axial end face of the radial sealing ring being provided with means for dispersing pressurised fluid characterised in that the means for dispersing the pressurised fluid is a labyrinth seal located on the axial and face.

In a preferred embodiment of the invention the means for dispersing pressurised fluid comprises means for dispensing pressure in a circumferential and a radial direction.

The seal of the invention is advantageous in that it is especially useful in pressure systems since the pressure acts on the walls of the lips and the portion of the seal joining the lips to enhance the pressurised fluid seal produced. The seal will hereinafter be described as a radial sealing ring.

In conventional land based pipe lines the pressure differential is such that the internal face of the seal experiences greater pressure than the external face. Thus, in such an embodiment, the first circumferential face of the seal is the inner face and the second circumferential face is the outer face.

In a further embodiment of the invention the seal arrangement may be such that the external pressure on the seal is greater than the internal pressure. Such seals are, for example, advantageous in that they may be suitable for sub-sea pipelines.

In an alternative embodiment of the invention for use in sub-sea applications, it may be necessary to provide means of sealing to prevent the ingress of water which may be (at times) at a higher pressure than the pipeline fluid. In this case a pair of primary sealing lips may be radially disposed from an outer circumferential face of the radial sealing ring, whilst means for dispersing pressurised fluid is provided on the inner axial end face of the radial sealing ring.

The dispersing means comprises a labyrinth seal, which may be located on the axial end face of the seal. In a preferred embodiment both axial end faces of the radial sealing ring are provided with a pressurised fluid dispersing member, in which case the labyrinth seals may be the same or different.

Labyrinth seals are known to cause reductions in pressure across the axial end face of the seal. Thus, the labyrinth seals used may comprise an array of apertures. The apertures or holes (together referred to as "the bulkheads") may be arranged irregularly or preferably, in a regular pattern. When a regular pattern is used a 'brick-bond' pattern is preferred, that is, the bulkheads are offset in relation to one another. On opposite sides of the seal faces the bulkheads may be circumferentially offset to one another, for example, by half the pitch of the bulkhead. Alternatively, the bulkheads may not necessarily be offset. Although it is within the scope of the present invention for the labyrinth seals to be separate to the radial sealing ring, or to be bonded to the radial sealing ring, it is preferred that the labyrinth seal is an integral part of the radial sealing ring. When the apertures or holes are in a regular pattern they may comprise two or three circumferential rows. Two circumferential rows are preferred.

The thickness of the labyrinth seal may vary, but is preferably from 1 to 5mm, more preferably from 1.0 to 2.5 mm. The dimensions of the apertures or holes may also be varied depending upon, *inter alia*, the pressure which the radial sealing ring is subjected to, the material of which the seal comprises, etc. However, it is preferred that the apertures or holes have a depth of from 0.5 to 2.0 mm and more preferably from 1.0 to 1.5 mm. For ease of manufacturing the apertures or holes are preferably substantially the same size and shape and may be substantially rectangular with dimensions of from 5 to 10 mm radial width by 15 to 20 mm circumferential length, preferably 8 by 16 mm. When rectangular apertures/holes are used then the longest side is preferably circumferential.

Any conventionally known materials may be used in the manufacture of the seals of the invention and preferably the labyrinth seal portion comprises the same material as the U ring portion of the radial sealing ring. Such materials include elastomers and/or plastics. Examples of elastomers include, but are not limited to rubbers, e.g. natural or synthetic rubbers. Of these synthetic rubbers are preferred such as nitrile rubbers, eg acrylonitrile butadiene copolymer (NBR), hydrogenated acrylonitrile butadiene rubber (HNBR), fluoroelastomers (FKM), such as Viton or perfluoroelastomers (FFKM), such as Kalrez. (Viton® and Kalrez® are available from Du Pont Dow Elastomers). Examples of plastics materials include fluorinated polymers such as PTFE (polytetrafluoroethylene).

The hardness of the elastomer, e.g. HNBR, may be varied. However, it is preferred that the hardness lies in the range of from 50 to 95 degrees Shore A.

The pressure which the seals of the invention are designed to tolerate may be up 105 to 110 bar under test conditions and from 20 to 70 bar under conventional operating conditions. Moreover the seals of the invention may withstand external pressures of up to 350 bar, e.g. from 20 to 350, preferably from 70 to 300, more preferably from 105 to 180 bar.

Under operating conditions there may be a risk of circumferential extrusion between the outer portion of the seal and the pipes. Thus, in a preferred embodiment a support ring is provided around the outer circumference of the seal eg a coiled spring. The spring is preferentially a metal spring eg a steel spring.

Furthermore, since the radial sealing ring assembly is free to continually expand in a radial direction under the working pressure acting on the lips of the seal. Thus, in a preferred embodiment of the invention the radial sealing ring may be provided with a containment ring. Such a containment ring preferentially comprises a metal ring situated on the non-pressure facing surface of the seal. The containment ring may optionally be integral to the seal ring or may be separate.

Thus in land based pipelines the containment ring is preferentially on the outer surface of the radial sealing ring. However, for use in connection with sub-sea pipelines, the containment ring is preferentially on the inner surface of the radial sealing ring.

In systems where the pressure differential across the radial sealing ring may be variable and/or in sub-sea applications a plurality of radial sealing rings of the invention may be used. For example, an outermost radial sealing ring may comprise a radial sealing ring with outer facing sealing lips and an innermost radial sealing ring may comprise a radial sealing ring with inner facing sealing lips. In such a system the innermost and outermost radial sealing rings may be separate, but may or may not be positioned adjacent to each other.

However, in a yet further feature of the invention a radial sealing ring is provided wherein the seal comprises an innermost radial sealing ring and an outermost radial sealing ring which share a common containment ring.

Thus according to a further feature of the invention we provide a radial sealing ring assembly adapted for use in a prescribed system which comprises a pair of primary sealing lips radially disposed on an inner circumferential face of the radial sealing ring, the primary and secondary lips being connected by a containment ring member. Further the radial sealing ring assembly as hereinbefore may comprise a single common containment ring.

The common containment ring may optionally be integral to the radial sealing rings or may be separate.

The radial sealing ring assembly of the invention finds utility particularly as large pipeline seals such as may be required in the oil, chemical, water or gas fields. They are capable of sealing surfaces which are parallel; non-parallel, eg by up to 5mm; or, arcuately eccentric, as may be found when a portion of the sidewall of a pipe may be cut away. The radial sealing rings are especially useful in introducing, for example, a three way joint, into a pipeline by connecting two pipes.

Thus the radial sealing ring assembly may be suitable for use in land based pipelines or sub-sea pipelines.

According to a further aspect of the invention we provide a method of introducing a three way joint into a pipeline which comprises a hole in a pipe and attaching a second pipe over the hole wherein the radial sealing ring of the invention lies between the two pipes.

We further provide a method as hereinbefore described which is suitable for use in a variable pressure system, such as a sub-sea system. Such a method may comprise using a plurality of radial sealing rings of the invention. The method especially comprises using an outermost radial sealing ring which may be provided with outer facing sealing lips and an innermost radial sealing ring which may be provided with inner facing sealing lips. In such a system the innermost and outermost radial sealing rings may be separate, but may or may not be positioned adjacent to each other.

The invention will now be described by way of example only and with reference to the accompanying drawings in which;
Figure 1 is a perspective view of a segment of a conventionally used U ring;
Figure 2 is a perspective view of a segment of a radial U ring seal Figure 3 is a cross-section of a segment of a radial sealing ring provided with a labyrinth seal of the invention
Figure 4 is a cross-section of the complete seal of the invention;
Figure 5 is a plan view of the complete seal of the invention;
Figure 6 is a cross-section of the seal of the invention for use in sub-sea pipelines; and
Figure 7 is a cross-section of a branched sub-sea pipeline using the seals of the invention; and
Figure 8 is a cross-section of a dual seal assembly.

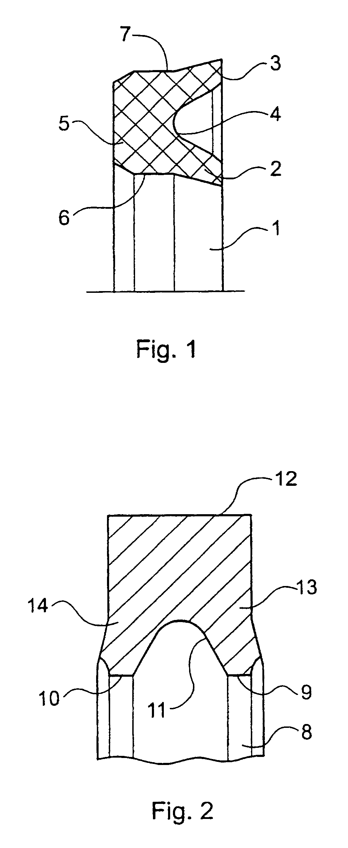

Referring to Figure 1 a conventional U ring seal (which is not of the invention) a seal (1) comprises lips (2 and 3) and lip joining section (4) and a body (5). The body (5) has outer walls (6 and 7). The seal (1) which is shown in segment only, is substantially circular such that the wall (6) is on the inside of the circle and the wall (7) on the outside of the circle.

With reference to Figure 2, a radial U ring seal (8) (which is not of the invention) comprises lips (9 and 10), a lip joining section (11) and a seal body (12). The seal body (12) has axial end faces (13 and 14). The seal (8) is substantially circular such the lips (9 and 10) face inwards towards the centre.

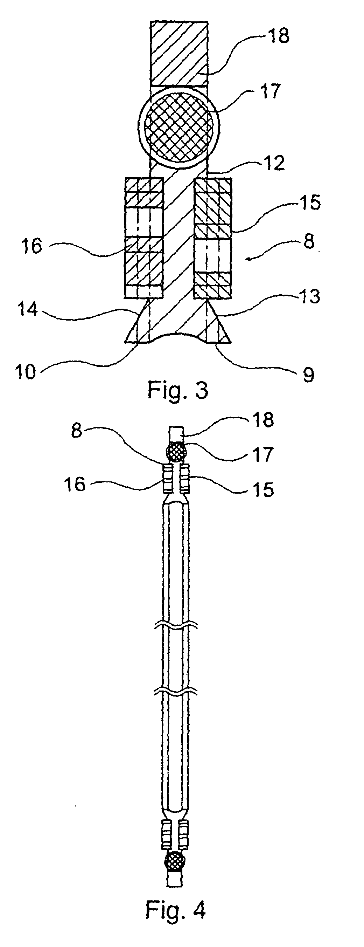

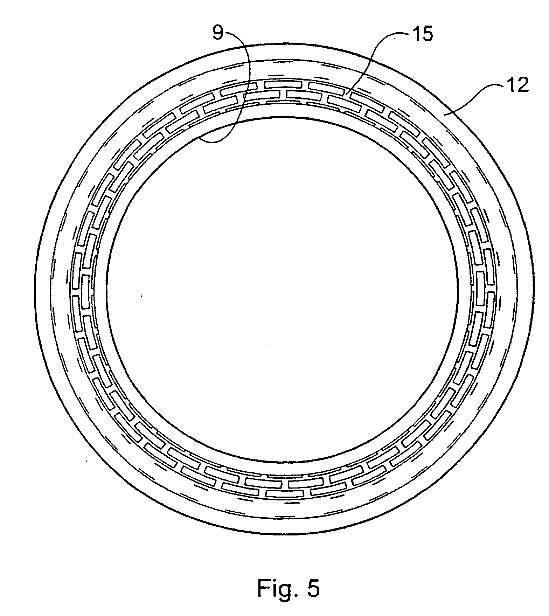

With reference to Figures 3 to 5, a radial sealing ring (8) comprises lips (9 and 10), the seal body (12) of the seal being provided with labyrinth seals (15 and 16) on each axial end face (13 and 14) respectively. The labyrinth seals (15 and 16) are in a "brick-bond" arrangement. The seal body (12) of the radial sealing ring (8) is provided with a support ring (17) in the form of a coiled spring moulded into the seal body (12). The radial sealing ring (8) is also provided with a containment ring (18) on the second or outer circumferential face which is outermost from the centre.

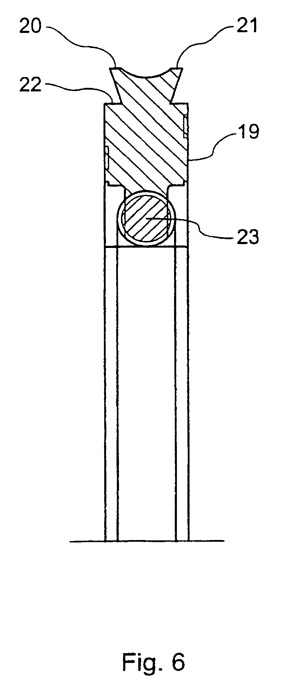

With reference to Figure 6, a sub-sea radial sealing ring (19) comprises primary sealing lips (20 and 21), the body of the seal being provided with labyrinth seals (not shown) as hereinbefore described. The primary sealing lips (20 and 21) are positioned on the outer facing circumferential surface (22) of the radial sealing ring (19). The body is provided with a support ring (23) and optionally with a containment ring (not shown).

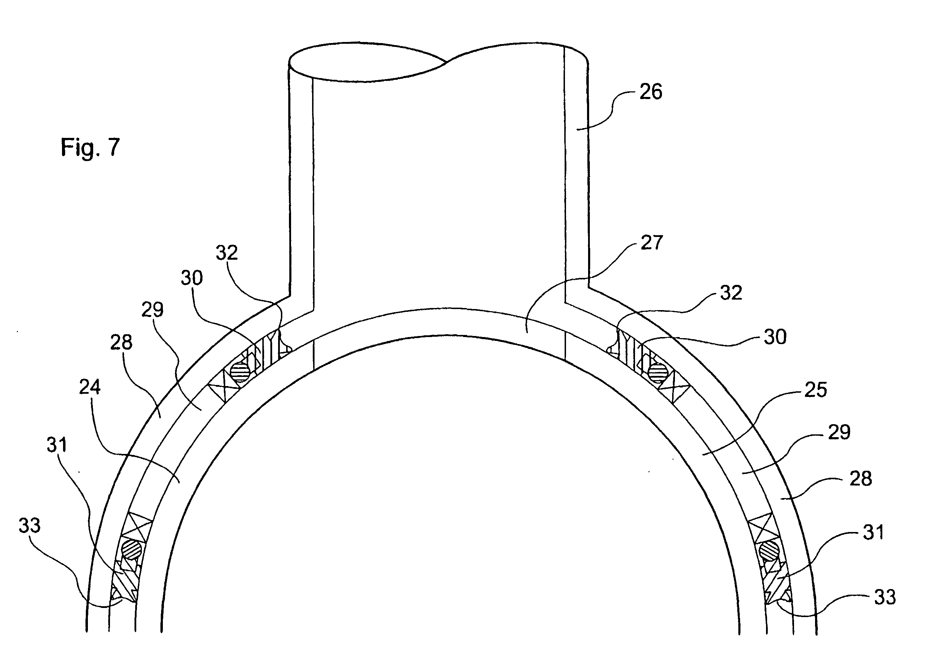

With reference to Figure 7, a sub-sea pipeline (24) comprises a main pipe body (25) and a branched pipe (26). The main pipe (25) is provided with an aperture (27) which is coincident with the branched pipe (26). The branched pipe (26) is provided with a flange (28) which overlies the main pipe (25). The gap (29) between the flange (28) and the main pipe body (25) is plugged with radial sealing ring (30) and radial sealing ring (31). Radial sealing ring (30) is provided with inward facing lips (32) which act to prevent leakage from inside the pipeline (24). Radial sealing ring (31) is provided with outward facing lips (33) which act to prevent leakage into the pipeline (24) if the external pressure is greater than the internal pressure.

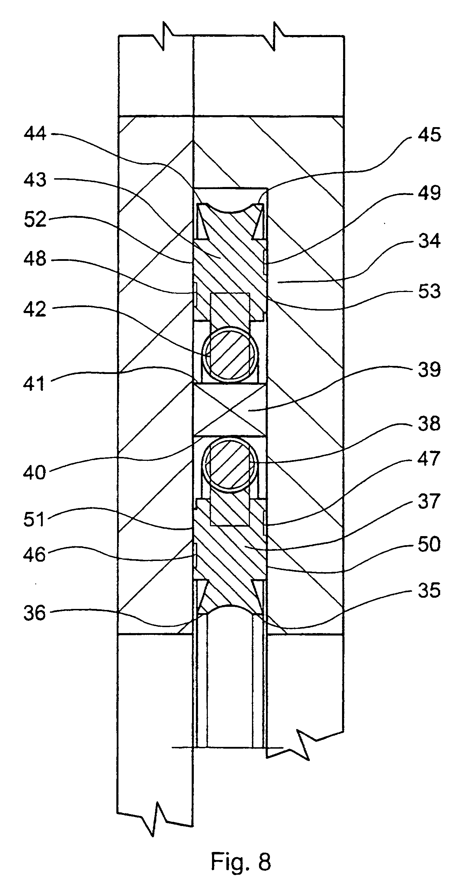

With reference to Figure 8, a radial sealing ring (37) is adapted for use in a variable pressure system. The radial seal ring (34) comprises a pair of inner facing lips (35 and 36) attached to a first seal body portion (37). The seal body (37) is provided with a support ring (38) and a containment ring (39) and the containment ring (39) is adjacent the support ring (38). The containment ring (39) may be integral to the support ring (38), or may be, for example, fixed onto the support ring (38), or may simply be sandwiched into position.

The containment ring (39) has a first face (40) which abuts or is connected to the support ring (38) and a second opposite face (41). The second face (41) is situated adjacent to a second support ring (42), the support ring (42) being attached to a second seal body (43) which is provided with lips (44 and 45).

Each of the bodies (37 and 43) is provided with labyrinth seals (46, 47, 48, 49) on the respective axial end faces (50, 51, 52, 53).

## Claims

1. A radial sealing ring assembly (8) adapted for use in a pressurised system which comprises a radial sealing ring provided with at least a pair of primary sealing lips (9 and 10) radially disposed on a first, circumferential, face (13) of the ring; a second, axial end, face (14) of the radial sealing ring being provided with means for dispersing pressurised fluid **characterised in that** the means for dispersing the pressurised fluid is a labyrinth seal (15 or 16) located on the axial end face (14).

2. A radial sealing ring assembly (8) according to claim 1 **characterised in that** the labyrinth seal comprises means for dispersing pressure in a circumferential direction.

3. A radial sealing ring assembly (8) according to claim 2 **characterised in that** the labyrinth seal comprises means for dispersing pressure in a circumferential direction and a radial direction.

4. A radial sealing ring assembly (8) according to claim 1 **characterised in that** the first circumferential face of the radial sealing ring is the inner face and the second circumferential face is the outer face.

5. A radial sealing ring assembly (8) according to claim 1 **characterised in that** the radial sealing ring is adapted to be used in a system wherein the external pressure on the radial sealing ring is greater than the internal pressure.

6. A radial sealing ring assembly (8) according to claim 5 **characterised in that** the primary sealing lips (9 and 10) are radially disposed from an outer circumferential face of the radial sealing ring, whilst the labyrinth seal is provided on the axial end face of the radial sealing ring.

7. A radial sealing ring assembly (8) according to claim 1 **characterised in that** both axial end faces of the radial sealing ring are provided with a labyrinth seal (15 and 16).

8. A radial sealing ring assembly (8) according to claim 6 **characterised in that** the labyrinth seal (15 and 16) comprises a plurality of apertures.

9. A radial sealing ring assembly (8) according to claim 6 **characterised in that** the labyrinth seal (15 and 16) comprises a plurality of holes.

10. A radial sealing ring assembly (8) according to claims 8 or 9 **characterised in that** the apertures or holes are arranged in a regular pattern.

11. A radial sealing ring assembly (8) according to claim 10 **characterised in that** the regular pattern is a 'brick-bond' pattern.

12. A radial sealing ring assembly (8) according to claim 1 **characterised in that** the labyrinth seal is an integral part of the axial end face of the radial sealing ring.

13. A radial sealing ring assembly (8) according to claim 11 **characterised in that** the apertures or holes are in a regular pattern of two or three circumferential rows.

14. A radial sealing ring assembly (8) according to claim 13 **characterised in that** the apertures or holes are in a regular pattern of two circumferential rows.

15. A radial sealing ring assembly (8) according to claims 8 or 9 **characterised in that** the apertures or holes are from 0.5 to 2.0mm deep.

16. A radial sealing ring assembly (8) according to claims 8 or 9 **characterised in that** the apertures or holes are preferably substantially the same size and shape.

17. A radial sealing ring assembly (8) according to claim 1 **characterised in that** the assembly is adapted to tolerate from 20 to 70 bar under conventional operating conditions.

18. A radial sealing ring assembly (8) according to claim 1 **characterised in that** the radial seal is provided with a containment ring (18).

19. A radial sealing ring assembly (8) according to claim 1 **characterised in that** the containment ring (18) is on the second or outer circumferential face of the radial sealing ring.

20. A radial sealing ring assembly (8) according to claim 1 **characterised in that** the containment ring (18) is on the first or inner circumferential face of the radial sealing ring.

21. A radial sealing ring assembly (8) according to claim 20 **characterised in that** the containment ring (18) comprises a support ring (23) around the second or outer circumferential face of the radial sealing ring.

22. A radial sealing ring assembly (8) according to claim 1 **characterised in that** the support ring (23) is preferentially a coiled spring.

23. A radial sealing ring assembly (8) according to claim 1 **characterised in that** the seal is provided with a containment ring (18) around the second or outer circumferential face of the radial sealing ring.

24. A radial sealing ring assembly (8) according to claim 1 **characterised in that** the assembly (8) comprises a pair of primary sealing lips (35, 36) attached to a first seal body portion (37), a pair of secondary sealing lips (44, 45) attached to a second seal body portion (43), one of the pairs of sealing lips being radially disposed on a first or inner circumferential face, the other pair being radially disposed on a second or outer circumferential face of the radial sealing assembly, the first and second seal body portions (37, 43) being connected by a containment ring (39) and provided with labyrinth seals (46, 47, 48, 49).

25. A method of introducing a three way joint into a pipeline which comprises a hole in a pipe and attaching a second pipe over the hole wherein the radial sealing ring assembly (8) according to any one of the preceding claims lies between the two pipes.

26. A method according to claim 25 **characterised in that** the method comprises using a plurality of radial sealing ring assemblies (8) according to claim 1.

27. A method according to claim 26 **characterised in that** the method comprises using an outermost radial sealing ring which is provided with outer facing sealing lips and an innermost radial sealing ring which is provided with inner facing sealing lips.

28. A method according to claim 27 **characterised in that** the innermost and outermost radial sealing rings are separate.

## Patentansprüche

1. Radiale Dichtungsringbaugruppe (8), die für die Verwendung in einem mit Druck beaufschlagten System geeignet ist, umfasst einen radialen Dichtungsring, der mit wenigstens einem Paar primärer Dichtungslippen (9 und 10) versehen ist, die radial auf einer ersten Umfangsfläche (13) des Rings angeordnet sind, wobei eine zweite, axiale Endfläche (14) des radialen Dichtungsrings mit Mitteln zum Dispergieren von mit Druck beaufschlagtem Fluid vorgesehen ist, **dadurch gekennzeichnet, dass** die Mittel zum Dispergieren des mit Druck beaufschlagten Fluids eine Labyrinthdichtung (15 oder 16) ist, die sich auf der axialen Endfläche (14) befindet.

2. Radiale Dichtungsringbaugruppe (8) nach Anspruch 1, **dadurch gekennzeichnet, dass** die Labyrinthdichtung Mittel zum Dispergieren des Drucks in einer Umfangsrichtung umfasst.

3. Radiale Dichtungsringbaugruppe (8) nach Anspruch 2, **dadurch gekennzeichnet, dass** die Labyrinthdichtung Mittel zum Dispergieren von Druck in einer Umfangsrichtung und in einer radialen Richtung umfasst.

4. Radiale Dichtungsringbaugruppe (8) nach Anspruch 1, **dadurch gekennzeichnet, dass** die erste Umfangsfläche des radialen Dichtungsrings die innere Fläche und die zweite Umfangsfläche die äußere Fläche ist.

5. Radiale Dichtungsringbaugruppe (8) nach Anspruch 1, **dadurch gekennzeichnet, dass** der radiale Dichtungsring so gestaltet ist, dass er in einem System zum Einsatz kommen kann, bei dem der externe Druck auf den radialen Dichtungsring höher ist als der interne Druck.

6. Radiale Dichtungsringbaugruppe (8) nach Anspruch 5, **dadurch gekennzeichnet, dass** die primären Dichtungslippen (9 und 10) radial von einer äußeren Umfangsfläche des radialen Dichtungsrings angeordnet sind, während die Labyrinthdichtung auf der axialen Endfläche des radialen Dichtungsrings vorgesehen ist.

7. Radiale Dichtungsringbaugruppe (8) nach Anspruch 1, **dadurch gekennzeichnet, dass** beide axialen Endflächen des radialen Dichtungsrings mit einer Labyrinthdichtung (15 und 16) versehen sind.

8. Radiale Dichtungsringbaugruppe (8) nach Anspruch 6, **dadurch gekennzeichnet, dass** die Labyrinthdichtung (15 und 16) eine Mehrzahl von Öffnungen umfasst.

9. Radiale Dichtungsringbaugruppe (8) nach Anspruch 6, **dadurch gekennzeichnet, dass** die Labyrinthdichtung (15 und 16) eine Mehrzahl von Löchern umfasst.

10. Radiale Dichtungsringbaugruppe (8) nach Anspruch 8 oder 9, **dadurch gekennzeichnet, dass** die Öffnungen oder Löcher in einem regelmäßigen Muster angeordnet sind.

11. Radiale Dichtungsringbaugruppe (8) nach Anspruch 10, **dadurch gekennzeichnet, dass** das regelmäßige Muster ein 'Ziegelverband'-Muster ist.

12. Radiale Dichtungsringbaugruppe (8) nach Anspruch 1, **dadurch gekennzeichnet, dass** die Labyrinthdichtung ein integraler Bestandteil der axialen Endfläche des radialen Dichtungsrings ist.

13. Radiale Dichtungsringbaugruppe (8) nach Anspruch 11, **dadurch gekennzeichnet, dass** die Öffnungen oder Löcher in einem regelmäßigen Muster von zwei oder drei Umfangsreihen angeordnet sind.

14. Radiale Dichtungsringbaugruppe (8) nach Anspruch 13, **dadurch gekennzeichnet, dass** die Öffnungen oder Löcher in einem regelmäßigen Muster von zwei Umfangsreihen angeordnet sind.

15. Radiale Dichtungsringbaugruppe (8) nach Anspruch 8 oder 9, **dadurch gekennzeichnet, dass** die Öffnungen oder Löcher eine Tiefe von 0,5 bis 2,0 mm haben.

16. Radiale Dichtungsringbaugruppe (8) nach Anspruch 8 oder 9, **dadurch gekennzeichnet, dass** die Öffnungen oder Löcher im Wesentlichen dieselbe Größe und Form haben.

17. Radiale Dichtungsringbaugruppe (8) nach Anspruch 1, **dadurch gekennzeichnet, dass** die Baugruppe so gestaltet ist, dass sie unter konventionellen Betriebsbedingungen 20 bis 70 bar aushalten kann.

18. Radiale Dichtungsringbaugruppe (8) nach Anspruch 1, **dadurch gekennzeichnet, dass** die radiale Dichtung mit einem Einfassungsring (18) versehen ist.

19. Radiale Dichtungsringbaugruppe (8) nach Anspruch 1, **dadurch gekennzeichnet, dass** der Einfassungsring (18) auf der zweiten oder äußeren Umfangsfläche des radialen Dichtungsrings vorhanden ist.

20. Radiale Dichtungsringbaugruppe (8) nach Anspruch 1, **dadurch gekennzeichnet, dass** sich der Einfassungsring (18) auf der ersten oder inneren Umfangsfläche des radialen Dichtungsrings befindet.

21. Radiale Dichtungsringbaugruppe (8) nach Anspruch 20, **dadurch gekennzeichnet, dass** der Einfassungsring (18) einen Tragring (23) um die zweite oder äußere Umfangsfläche des radialen Dichtungsrings umfasst.

22. Radiale Dichtungsringbaugruppe (8) nach Anspruch 1, **dadurch gekennzeichnet, dass** der Tragring (23) vorzugsweise eine Spiralfeder ist.

23. Radiale Dichtungsringbaugruppe (8) nach Anspruch 1, **dadurch gekennzeichnet, dass** die Dichtung mit einem Einfassungsring (18) um die zweite oder äußere Umfangsfläche des radialen Dichtungsrings versehen ist.

24. Radiale Dichtungsringbaugruppe (8) nach Anspruch 1, **dadurch gekennzeichnet, dass** die Baugruppe (8) Folgendes umfasst: ein Paar primärer Dichtungslippen (35, 36), die an einem ersten Dichtungskörperabschnitt (37) befestigt sind, ein Paar sekundärer Dichtungslippen (44, 45), die an einem zweiten Dichtungskörperabschnitt (43) befestigt sind, wobei eines der Paare von Dichtungslippen radial auf einer ersten oder inneren Umfangsfläche angeordnet ist, während das andere Paar radial auf einer zweiten oder äußeren Umfangsfläche der radialen Dichtungsbaugruppe angeordnet ist, wobei der erste und der zweite Dichtungskörperabschnitt (37, 43) durch einen Einfassungsring (39) verbunden und mit Labyrinthdichtungen (46, 47, 48, 49) versehen sind.

25. Verfahren zum Einführen einer Dreiwegverbindung in eine Pipeline, die ein Loch in einem Rohr umfasst, und Befestigen eines zweiten Rohres über dem Loch, wobei die radiale Dichtungsringbaugruppe (8) gemäß einem der vorliegenden Ansprüche zwischen den beiden Rohren liegt.

26. Verfahren nach Anspruch 25, **dadurch gekennzeichnet, dass** das Verfahren die Verwendung einer Mehrzahl von radialen Dichtungsringbaugruppen (8) nach Anspruch 1 umfasst.

27. Verfahren nach Anspruch 26, **dadurch gekennzeichnet, dass** das Verfahren die Verwendung eines äußersten radialen Dichtungsrings, der mit äußeren Flächendichtungslippen versehen ist, und einen innersten radialen Dichtungsring umfasst, der mit inneren Flächendichtungslippen versehen ist.

28. Verfahren nach Anspruch 27, **dadurch gekennzeichnet, dass** die innersten und äußersten radialen Dichtungsringe separat sind.

## Revendications

1. Ensemble de bague d'étanchéité radiale (8), adapté en vue d'une utilisation dans un système pressurisé, qui comprend une bague d'étanchéité radiale laquelle est munie d'une paire au moins de lèvres d'étanchéité primaires (9 et 10) disposées dans le plan radial sur une première face circonférentielle (13) de la bague ; une deuxième face, sur l'extrémité axiale, (14) de la bague d'étanchéité radiale étant pourvue d'un moyen servant à disperser le fluide pressurisé, **caractérisé en ce que** le moyen servant à disperser le fluide pressurisé est un joint à labyrinthe (15 ou 16) situé sur la face d'extrémité axiale (14).

2. Ensemble de bague d'étanchéité radiale (8), selon la revendication 1, **caractérisé en ce que** le joint à labyrinthe comporte un moyen servant à disperser la pression dans une direction circonférentielle.

3. Ensemble de bague d'étanchéité radiale (8), selon la revendication 2, **caractérisé en ce que** le joint à labyrinthe comporte un moyen servant à disperser la pression dans une direction circonférentielle et dans une direction radiale.

4. Ensemble de bague d'étanchéité radiale (8), selon la revendication 1, **caractérisé en ce que** la première face circonférentielle de la bague d'étanchéité radiale est la face interne, alors que la deuxième face circonférentielle est la face externe.

5. Ensemble de bague d'étanchéité radiale (8), selon la revendication 1, **caractérisé en ce que** la bague d'étanchéité radiale est adaptée de façon à pouvoir être utilisée dans un système dans lequel la pression externe s'exerçant sur la bague d'étanchéité radiale est supérieure à la pression interne.

6. Ensemble de bague d'étanchéité radiale (8), selon la revendication 5, **caractérisé en ce que** les lèvres d'étanchéité primaires (9 et 10) sont disposées dans le plan radial à partir d'une face circonférentielle externe de la bague d'étanchéité radiale, tandis que le joint à labyrinthe est prévu sur la face d'extrémité axiale de la bague d'étanchéité radiale.

7. Ensemble de bague d'étanchéité radiale (8), selon la revendication 1, **caractérisé en ce que** les deux faces d'extrémité axiale de la bague d'étanchéité radiale sont munies d'un joint à labyrinthe (15 et 16).

8. Ensemble de bague d'étanchéité radiale (8), selon la revendication 6, **caractérisé en ce que** le joint à labyrinthe (15 et 16) comporte une pluralité d'ouvertures.

9. Ensemble de bague d'étanchéité radiale (8), selon la revendication 6, **caractérisé en ce que** le joint à labyrinthe (15 et 16) comporte une pluralité de trous.

10. Ensemble de bague d'étanchéité radiale (8), selon les revendications 8 ou 9, **caractérisé en ce que** les ouvertures ou les trous sont agencés selon un schéma régulier.

11. Ensemble de bague d'étanchéité radiale (8), selon la revendication 10, **caractérisé en ce que** le schéma régulier est un schéma "d'appareil de maçonnerie".

12. Ensemble de bague d'étanchéité radiale (8), selon la revendication 1, **caractérisé en ce que** le joint à labyrinthe fait partie intégrante de la face d'extrémité axiale de la bague d'étanchéité radiale.

13. Ensemble de bague d'étanchéité radiale (8), selon la revendication 11, **caractérisé en ce que** les ouvertures ou les trous se présentent sous la forme d'un schéma régulier de deux ou trois rangées circonférentielles.

14. Ensemble de bague d'étanchéité radiale (8), selon la revendication 13, **caractérisé en ce que** les ouvertures ou les trous se présentent sous la forme d'un schéma régulier de deux rangées circonférentielles.

15. Ensemble de bague d'étanchéité radiale (8), selon les revendications 8 ou 9, **caractérisé en ce que** les ouvertures ou les trous ont une profondeur de 0,5 mm à 2,0 mm.

16. Ensemble de bague d'étanchéité radiale (8), selon les revendications 8 ou 9, **caractérisé en ce que** les ouvertures ou les trous ont de préférence la même taille et la même forme essentiellement.

17. Ensemble de bague d'étanchéité radiale (8), selon la revendication 1, **caractérisé en ce que** l'ensemble est adapté de façon à tolérer une pression de 20 à 70 bars dans des conditions de fonctionnement classiques.

18. Ensemble de bague d'étanchéité radiale (8), selon la revendication 1, **caractérisé en ce que** le joint radial est muni d'une bague de retenue (18).

19. Ensemble de bague d'étanchéité radiale (8), selon la revendication 1, **caractérisé en ce que** la bague de retenue (18) se trouve sur la deuxième face ou la face circonférentielle externe de la bague d'étanchéité radiale.

20. Ensemble de bague d'étanchéité radiale (8), selon la revendication 1, **caractérisé en ce que** la bague de retenue (18) se trouve sur la première face ou la face circonférentielle interne de la bague d'étanchéité radiale.

21. Ensemble de bague d'étanchéité radiale (8), selon la revendication 20, **caractérisé en ce que** la bague de retenue (18) comporte une bague de support (23) qui est située autour de la deuxième face ou de la face circonférentielle externe de la bague d'étanchéité radiale.

22. Ensemble de bague d'étanchéité radiale (8), selon la revendication 1, **caractérisé en ce que** la bague de support (23) est de préférence un ressort à spirale.

23. Ensemble de bague d'étanchéité radiale (8), selon la revendication 1, **caractérisé en ce que** le joint est pourvu d'une bague de retenue (18) qui est située autour de la deuxième face ou de la face circonférentielle externe de la bague d'étanchéité radiale.

24. Ensemble de bague d'étanchéité radiale (8), selon la revendication 1, **caractérisé en ce que** l'ensemble (8) comporte une paire de lèvres d'étanchéité primaires (35, 36) qui sont attachées à une première section de corps de joint (37), une paire de lèvres d'étanchéité secondaires (44, 45) qui sont attachées à une deuxième section de corps de joint (43), l'une des paires de lèvres d'étanchéité étant disposée dans le plan radial sur une première face ou une face circonférentielle interne, alors que l'autre paire est disposée dans le plan radial sur une deuxième face ou une face circonférentielle externe de l'ensemble d'étanchéité radial, les première et deuxième sections de corps de joint (37, 43) étant raccordées par une bague de retenue (39) et munies de joints à labyrinthe (46, 47, 48, 49).

25. Procédé permettant d'introduire un raccord à trois voies dans une canalisation qui comporte un orifice dans une conduite, et d'attacher une deuxième conduite au-dessus de l'orifice, cas dans lequel l'ensemble de bague d'étanchéité radiale (8), conforme à l'une quelconque des revendications précédentes, se trouve entre les deux conduites.

26. Procédé, selon la revendication 25, **caractérisé en ce que** le procédé comprend l'utilisation d'une pluralité d'ensembles de bagues d'étanchéité radiales (8), selon la revendication 1.

27. Procédé, selon la revendication 26, **caractérisé en ce que** le procédé comprend l'utilisation d'une bague d'étanchéité radiale située le plus à l'extérieur, laquelle est munie de lèvres d'étanchéité dirigées vers l'extérieur, ainsi que d'une bague d'étanchéité radiale située le plus à l'intérieur, laquelle est munie de lèvres d'étanchéité dirigées vers l'intérieur.

28. Procédé, selon la revendication 27, **caractérisé en ce que** la bague d'étanchéité radiale située le plus à l'intérieur et la bague d'étanchéité radiale située le plus à l'extérieur sont séparées.
